# EUROPEAN PATENT APPLICATION

(11) **EP 3 708 407 A1**
(43) Date of publication of application: **16.09.2020**
(21) Application number: 18875792.6
(22) Date of filing: 27.08.2018
(51) Int. Cl.: B60L 15/20, B60L 15/38

(54) **CONTROL METHOD AND SYSTEM FOR ELECTRIC VEHICLE DRIVE SYSTEM**

(30) Priority: 08.11.2017 CN 201711091325
(71) Applicant: NIO Nextev Limited, Central, Hong Kong (HK)
(72) Inventor: GU, Yufeng, Shanghai 201804 (CN); LI, Shouwei, Shanghai 201804 (CN)
(74) Representative: Vossius & Partner Patentanwälte Rechtsanwälte mbB
(86) International application number: PCT/CN2018/102558
(87) International publication number: WO 2019/091187

(57) **Abstract**

A control method of an electric vehicle drive system is applicable to an electric vehicle including a front drive motor (105) and a rear drive motor (106), and the method includes: detecting drive control parameters related to the drive motors, such as a slip rate parameter, an instability parameter and a chassis control state parameter, and when an abnormal parameter is detected in the drive control parameters, performing processing based on the type of the abnormal parameter, for example, torque output limit, or transferring the torque from one drive motor to the other drive motor.

## Description

### Field of the Invention

The present invention relates to the field of electric vehicles, in particular to the control of an electric vehicle drive system.

### Background of the Invention

The four-wheel drive systems of traditional internal combustion engine vehicles are mainly divided into three types: full-time four-wheel drive, time-sharing four-wheel drive and timely four-wheel drive. Either way, the main form of the four-wheel drive is to perform coupling through a mechanical torque distribution device between front and rear axles. This mechanical four-wheel drive implementation system is complicated, the fuel economy during the four-wheel drive is reduced, the cost is high, and the distribution ratio of the front and rear axles is limited.

For general electric vehicles, the main drive form is a single-motor front drive, and the rear end of the motor has only single-stage main reduction, but no gearbox. In this solution, there is only one high efficiency area of the full vehicle due to the lack of the gearbox, such that the overall efficiency is low. At high vehicle speeds, due to the inherent characteristics of the motor and the absence of the gearbox, it is difficult to accelerate the full vehicle. At the same time, only the adhesive force of front wheels can be used in the front drive solution, so the acceleration performance is severely limited.

In the known four-wheel drive electric vehicles, a technique of formulating a drive control method according to its current drive mode, such as a compulsive single-motor drive mode, a priority single-motor drive mode or a four-wheel drive mode, is adopted. If the current drive mode of the four-wheel drive electric vehicle is the compulsive single-motor drive mode, a full vehicle controller controls one motor to participate in the drive, and the other motor is in a non-working state; if the current drive mode of the four-wheel drive electric vehicle is the priority single-motor drive mode, when the drive request torque does not exceed the torque of a rear motor, the full vehicle controller controls the rear motor to participate in the drive, and the front motor is in the non-working state; the front motor only participates in the drive in the case of rapid acceleration of the four-wheel drive electric vehicle; and if the current drive mode of the four-wheel drive electric vehicle is the four-wheel drive mode, then the full vehicle controller controls the front and rear motors to participate in the drive at the same time, and correspondingly allocates the torque to the front and rear motors according to the front and rear load distribution. However, a control technique is lacking in the existing four-wheel drive electric vehicles, which performs dynamic conversion and control on the drive mode and the torque distribution of the electric vehicles conveniently and efficiently, so that the driving performance of the electric vehicles is improved, the driving experience is enhanced, and the safety is improved.

### Summary of the Invention

In order to solve the above problems, one aspect of the present invention provides a control method of an electric vehicle drive system. The method is executed in an electric vehicle including a front drive motor and a rear drive motor, and the method includes the following steps: (a) detecting drive control parameters related to the drive motors, and (b) when an abnormal parameter is detected in the drive control parameters, performing processing based on the type of the abnormal parameter.

Another aspect of the present invention provides a control system of an electric vehicle drive system for controlling the electric vehicle drive system including a front drive motor and a rear drive motor, and the control system includes a detection device, configured to detect drive control parameters related to the drive motors, and a processing device configured to, when an abnormal parameter is detected in the drive control parameters, perform processing based on the type of the abnormal parameter.

Preferably, in the aforementioned control system of the electric vehicle drive system, the detection device includes a slip rate detection unit, configured to detect the slip rate and judge whether the slip rate indicates that the vehicle is slipping; and the processing device is configured to: when it is judged that the vehicle is slipping according to the slip rate, determine the presence of a slip rate abnormal parameter, compare the current vehicle speed with a first threshold, and if the vehicle speed is lower than the first threshold, control the vehicle to enter a four-wheel drive mode.

Preferably, in the aforementioned control system of the electric vehicle drive system, the processing device is configured to: limit the torque by a chassis controller when controlling the vehicle to enter the four-wheel drive mode; and if the vehicle speed is higher than the first threshold, maintain the original torque distribution of the vehicle, and limit the torque by the chassis controller.

Preferably, in the aforementioned control system of the electric vehicle drive system, the processing device is configured to compare the current vehicle speed with the first threshold, if the vehicle speed is lower than the first threshold, enter the four-wheel drive mode, limit the torque output of the front drive motor or the rear drive motor by the chassis controller, and transfer the limited output torque to the other drive motor.

Preferably, in the aforementioned control system of the electric vehicle drive system, the detection device includes a chassis control detection unit, configured to receive a parameter indicating the control state of a chassis and judge whether the parameter indicates chassis control failure; and the processing device is configured to: in the case of judging chassis control failure, determine the presence of a chassis control failure parameter, drive the front and rear drive motors of the electric vehicle to work simultaneously, and perform PI control adjustment on the torque of the front axle and the torque of the rear axle according to the current slip rate and the target slip rate of the electric vehicle.

Preferably, in the aforementioned control system of the electric vehicle drive system, the detection device includes a chassis control detection unit, configured to detect a chassis control opening and closing state and judge whether the chassis is closed; and the processing device is configured to: when it is judged that the chassis is closed, determine the presence of a chassis opening and closing abnormal parameter, and drive the front and rear drive motors of the electric vehicle to work simultaneously.

Preferably, in the aforementioned control system of the electric vehicle drive system, the detection device includes an electric vehicle stable state detection unit, configured to receive an instability parameter indicating the instability of the electric vehicle from the chassis, and judge whether the electric vehicle is in an unstable state; and the processing device is configured to: when it is judged that the electric vehicle is in the unstable state, maintain the torque distribution of the electric vehicle, and limit the torque by the chassis controller.

Preferably, in the aforementioned control system of the electric vehicle drive system, the detection device includes a drive motor temperature detection unit, configured to receive a temperature parameter of the front drive motor and a temperature parameter of the rear drive motor transmitted by a motor temperature sensing device, and judge whether temperatures characterized by the temperature parameter of the front drive motor and the temperature parameter of the rear drive motor respectively exceed a preset temperature threshold; and the processing device is configured to: in the case that any one of the temperature parameter of the front drive motor and the temperature parameter of the rear drive motor exceeds the temperature threshold, adjust the drive mode based on whether the electric vehicle is currently in the four-wheel drive mode, the front drive mode or the rear drive mode.

The drive motor temperature detection unit can further judge whether the temperature difference between the front drive motor and the rear drive motor exceeds a temperature difference threshold based on the temperature parameter of the front drive motor and the temperature parameter of the rear drive motor; and the processing device is configured to: when it is determined that the temperature difference exceeds the temperature difference threshold and the temperature of at least one of the drive motors exceeds the temperature threshold, adjust the drive mode based on whether the electric vehicle is currently in the four-wheel drive mode, the front drive mode or the rear drive mode.

The aforementioned control system of the electric vehicle drive system can preset an economic mode, a sports mode and an automatic mode for the electric vehicle.

Preferably, the control system of the electric vehicle drive system is configured to: when the electric vehicle is running in the economic mode, drive the vehicle to run in the rear drive mode, the front drive mode or the four-wheel drive mode based on the vehicle speed and a torque request; and determine the torque distribution based on a preset torque distribution ratio in the four-wheel drive mode.

When the electric vehicle is running in the sports mode, the front drive motor and the rear drive motor work at the same time, and the torque is distributed according to the front and rear axle load ratio of the electric vehicle; and when the electric vehicle is running in the automatic mode, the driving intention is estimated according to the operation of a driver on an accelerator pedal, and the drive mode is switched to the sports mode or the economic mode accordingly.

Preferably, the aforementioned control system of the electric vehicle drive system can also preset an intelligent interconnection mode for the electric vehicle, and determine the torque distribution of the electric vehicle based on information from a remote end in this mode.

In the aforementioned control system of the electric vehicle drive system, wherein the processing device is configured to: in the torque distribution process of the electric vehicle, if torque switch between the front axle and the rear axle occurs, the torque is filtered before the torque switch is applied to the front axle and the rear axle.

Another aspect of the present invention provides a controller. The controller includes a memory and a processor, the memory stores a computer program, the processor can communicate with a chassis controller of an electric vehicle, and the program can implement the steps of the aforementioned method when executed by the processor.

Another aspect of the present invention provides a computer-readable storage medium for storing computer instructions, wherein the instructions can implement the steps of the aforementioned method when executed by a computer or a processor.

The above description is only an overview of the technical solutions of the present invention. In order to understand the technical means of the present invention more clearly, the present invention can be implemented in accordance with the contents of the specification, and in order to make the above and other objects, features and advantages of the present invention more obvious and understandable, preferred embodiments are listed below and are descried in detail below in combination with drawings.

### Brief Description of the Drawings

Fig. 1 is a schematic diagram of a solution of an electric vehicle drive system;
Fig. 2 is a torque distribution solution in an economic mode of the electric vehicle drive system;
Fig. 3 is a schematic diagram of conversion of the electric vehicle drive system between the economic mode and a sports mode;
Fig. 4 is a schematic diagram of a cloud interconnection mode of the electric vehicle drive system putting into operation;
Fig. 5 is a schematic diagram of torque architecture of the electric vehicle drive system;
Fig. 6 is a schematic diagram of a secondary filtering operation of front and rear torques
Fig. 7 is a schematic diagram of one drive mode conversion of the electric vehicle drive system;
Fig. 8 is a schematic diagram of another drive mode conversion of the electric vehicle drive system;
Fig. 9 is a schematic diagram of yet another drive mode conversion of the electric vehicle drive system.

### Detailed Description of the Embodiments

In order to further illustrate the technical means and effects adopted in the present invention to achieve the intended purpose of the invention, specific embodiments and effects of a control method and system of intelligent drive of an electric vehicle proposed in accordance with the present invention are described in detail below, in conjunction with the drawings and preferred embodiments.

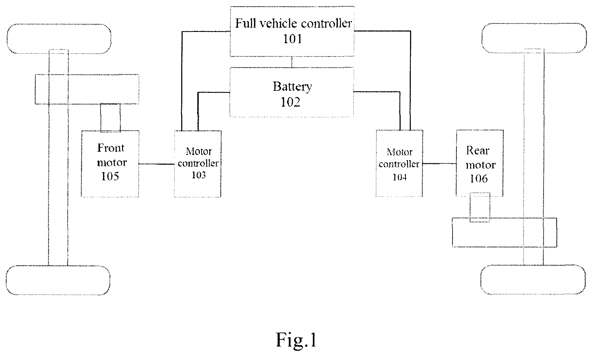

Fig. 1 is a schematic diagram of a full vehicle system of an electric vehicle according to an example of the present invention. The schematic diagram is a simplified schematic illustration, which is intended to convey parts and components related to the present invention more clearly, rather than limiting the full vehicle control system of the electric vehicle to which the present invention is applicable. As shown in the figure, the full vehicle control system of the electric vehicle includes a front axle drive motor (abbreviated as a front drive motor or a front drive motor) 105, and a rear axle drive motor (abbreviated as a rear drive motor or a rear drive motor) 106, and the front drive motor 105 and the rear drive motor 106 are respectively controlled by a corresponding front axle drive motor controller (abbreviated as a front drive controller) 103 and a rear axle drive motor controller (abbreviated as a rear drive controller) 104. A battery 102 is connected with the front and rear axle drive motor controllers 103 and 104, and supplies power to the front and rear axle drive motor controllers 103 and 104. A full vehicle controller 101 is connected with the front and rear axle drive motor controllers 103 and 104 and the battery 102, determines a drive control solution and/or a front and rear drive motor output torque distribution solution according to parameters such as a current vehicle driving state parameter, a current drive mode, a torque request value or the like, and generates corresponding control instructions to control the operation of the front and rear axle drive motors 105 and 106 and the power output distribution of the battery 102. In one example, the motor efficiency of the front axle and the rear axle is different from the gear ratio of a main retarder. The drive efficiency of the rear axle is high at low speeds, the drive efficiency of the front axle is high at high speeds, and the simultaneous working efficiency of the front and rear axles is the highest at large torques.

According to the example of the present invention, a chassis controller (not shown) is in communication connection with the full vehicle controller 101 to receive one or more of drive control parameters from the chassis, such as vehicle slip rate, whether the vehicle is unstable and other information, and to perform corresponding processing when an abnormal parameter appear in these parameters. In addition, although not shown in Fig. 1, according to some examples of the present invention, the full vehicle controller can also receive signals from temperature detection devices, these temperature detection devices are used for detecting the temperatures of the front drive motor and the rear drive motor, the temperature detection devices can be existing components in the vehicle, and can also be components provided as required. The signals sent by the chassis controller to the full vehicle controller will be further explained below with reference to examples, but the signals transmitted by the chassis controller to the full vehicle controller are not limited to those described herein.

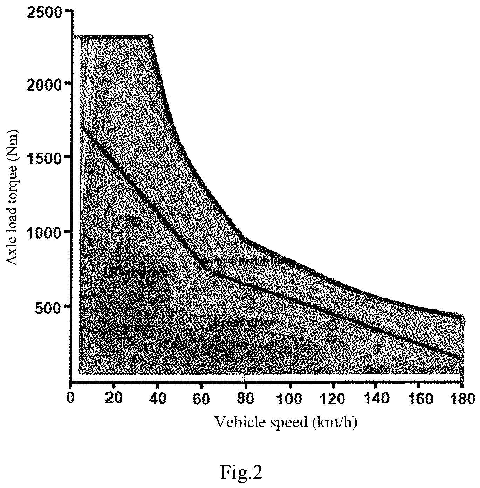

Fig. 2 illustrates the relationship distribution between the drive modes obtained based on existing data and the vehicle speed and the axle load torque. In Fig. 2, the horizontal axis represents the vehicle speed; and the vertical axis represents the axle load torque. The axle load torque corresponds to a force applied to a braking system by the driver by stepping on the accelerator. Fig. 2 shows that in different drive modes, there is a clear difference in the drive efficiency distribution. According to different offline efficiency curves of the front and rear axle drive motors, different loads, different reducer gear ratios and other factors, an efficiency map changes accordingly. In the example shown in Fig. 2, it can be observed that, in the rear drive mode, the highest efficiency occurs in the interval of an optimal vehicle speed torque matching accessory in which the vehicle speed is 25 km/h and the axle load torque is 500 Nm, and the drive efficiency is gradually reduced while the vehicle speed and the torque deviate from the optimal ratio. Similarly, in the front drive mode, the optimal efficiency occurs in the interval of the optimal vehicle speed torque matching accessory in which the vehicle speed is 60 km/h and the axle load torque is 150 Nm, and the drive efficiency is gradually reduced while the vehicle speed and the torque deviate from the optimal ratio. At a certain vehicle speed, a higher axle load torque can only be obtained in the four-wheel drive mode.

According to some examples of the present invention, the vehicle is preset with drive modes, which are respectively an economic mode, an automatic mode and a sports mode. In some cases, an intelligent interconnection mode is also preset.

The economic mode is a mode in which the motor output efficiency is the priority. When the electric vehicle is running in the economic mode, the vehicle is driven to run in the rear drive, front drive, or four-wheel drive mode based on the vehicle speed and the torque request, and in the four-wheel drive mode, the torque distribution is determined based on a preset torque distribution ratio. In a nutshell, in the economic mode, the rear drive mode is used if the vehicle is traveling at a low speed, the front drive mode is used at a high speed, and the four-wheel drive mode is used when a large torque is required. As an example, in the case that the vehicle is selected to run in the economic mode, the torque is distributed based on the relationship illustrated in Fig. 2 to achieve the optimal drive efficiency. For example, when the vehicle speed is 35km/h and the axle load torque is 500Nm, the rear drive mode is used; when the vehicle speed is 80 km/h and the axle load torque is 400Nm, the front drive mode is used; and when the axle load torque is 2000Nm, the four-wheel drive mode is used, or in the case that the vehicle speed and the axle load torque are relatively large, for example, when the current vehicle speed is 60km/h and the axle load torque is 1000Nm, the four-wheel drive mode is used. In the four-wheel drive mode, the torque of the rear drive motor and the front drive motor is distributed according to different ratios, and the ratio of torque distribution can be determined based on the efficiency of the motors. In the example of the present invention, the distribution ratios of the front and rear drive motors based on different vehicle speeds and different axle load torques are preset, so that the controller (such as the full vehicle controller) used for torque distribution can decide the torque distribution in the four-wheel drive mode accordingly.

In the economic mode, if the drive motors of the front and rear axles are asynchronous motors, if a certain motor does not participate in the work, that is, when its distributed torque is basically zero, then the pre-excitation of the motor can be turned off, which is equivalent to that the motor enters a sleep mode, and when a certain motor is about to work, the motor needs to be woken up in advance to allow the motor to perform pre-excitation.

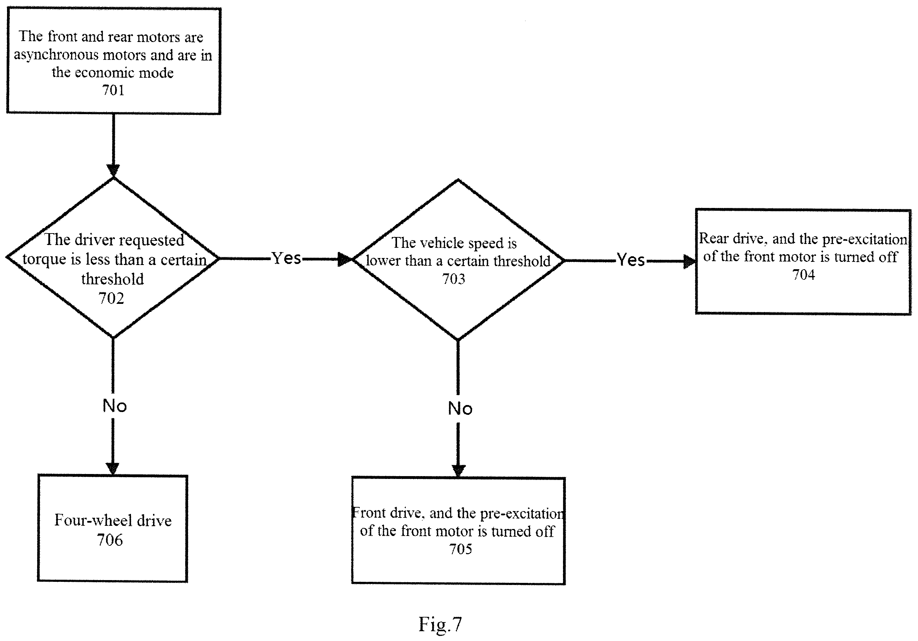

Fig. 7 is an example of a process of switching the drive mode in the economic mode according to an example of the present invention. As shown in Fig. 7, in step 702, whether a driver requested torque is less than a preset threshold is judged; and if the driver requested torque is greater than the preset threshold, the vehicle is switched to the four-wheel drive mode, as shown in step 706. When the driver requested torque is less than a preset threshold, whether the vehicle speed is lower than a preset threshold is judged in step 703; when the vehicle speed is lower than the preset threshold, such as lower than 40 kph, the full vehicle is in the rear drive mode, at this time, the front motor can be turned off to enter the sleep mode, as shown in step 704; when the vehicle speed is higher than another preset threshold, such as higher than 50kph, the full vehicle should be in the front drive In this mode, at this time, the rear motor can be turned off to enter the sleep mode, as shown in step 705; and when the vehicle speed is between 40kph and 50kph, neither motor can enter the sleep mode. In the sleep mode, an IGBT (insulated gate bipolar transistor) in the motor does not work, and there is basically no energy consumption as a result. IGBTs are installed in inverters of the motors, usually a plurality of IGBTs are used together to adjust the voltage performance of the motors, and when any one of the rear drive motor and the front drive motor enters the sleep mode, their respective IGBT switches are turned off at the same time to save energy.

The sports mode is a mode in which the front and rear drive motors work simultaneously, and at this time, the torque is distributed according to the front and rear axle load ratio. For example, the axle load ratio of the front axle to the rear axle is 4:6, then the load ratio distributed to the front axle and the rear axle is also 4:6. In the sports mode, since the front and rear drive motors work simultaneously, the torque response of the full vehicle is about twice as fast as that of single drive in the economic mode, at the same time, the normal acceleration performance is greatly improved by means of the ground adhesion of the front axle and the rear axle.

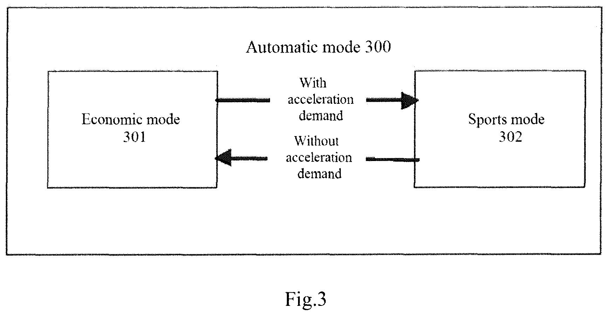

The automatic mode is that the full vehicle controller predicts the driving intention according to the operation of the driver on the accelerator pedal, and the automatic mode is switched to the sports mode or the economic mode accordingly. By way of example rather than limiting, the automatic mode can also be switched to other modes not mentioned here. Fig. 3 shows a schematic diagram of the electric vehicle switching between the economic mode 301 and the sports mode 302. As shown in Fig. 3, in the automatic mode 300, the full vehicle controller estimates the driving intention according to the operation of the driver on the accelerator pedal, that is, when the driver has an emergency acceleration request, switches to the sports mode 302; and when the acceleration request of the driver is not large, the full vehicle controller switches to the economic mode 301. The emergency acceleration request and the ordinary acceleration request of the driver can be judged in different ways, for example, the judgment can be made according to the comparison between the driving parameters such as the depth and strength of the driver on the accelerator pedal and a preset reference value group. The habitual driving parameters of the driver can also be recorded, and the preset reference value group is corrected based on the habitual driving parameters of a specific driver. The habitual driving parameters of multiple drivers and the corresponding preset reference value groups can be stored in one electric vehicle, and different preset reference value groups are called during the driving of different drivers. The habitual driving parameters of a large number of drivers and the corresponding preset reference value groups can also be stored remotely and recalled in real time via a network connection while driving.

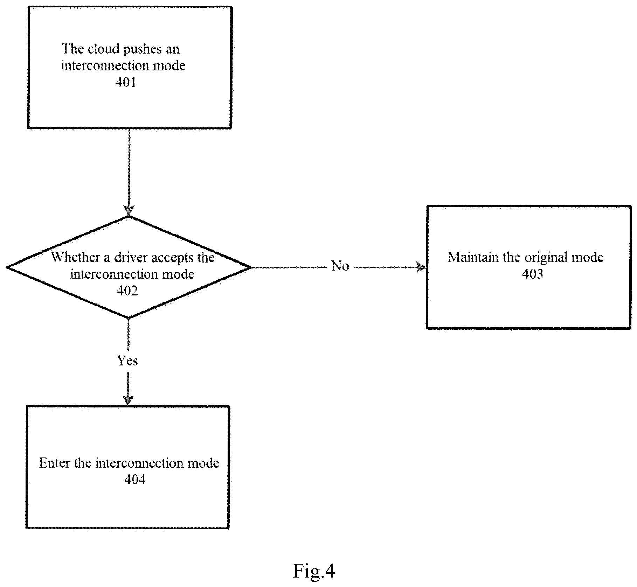

The intelligent interconnection mode is a mode of determining to adopt which of the rear drive, the front drive or the four-wheel drive mode according to the push of a cloud controller. The full vehicle controller accepts the intelligent interconnection mode pushed from the cloud controller, the intelligent mode includes the front and rear torque distribution ratio, a maximum drive torque limit of the front and rear axles, and a minimum energy recovery torque limit of the front and rear axles. As shown in Fig. 4, when the cloud controller pushes the mode 401 to the full vehicle controller, the driver can choose to accept the recommendation or reject the recommendation, as shown in step 402. If the driver accepts the cloud-recommended mode, the vehicle enters the cloud-recommended mode (the interconnection mode), as shown in step 404, or otherwise the original mode is maintained, as shown in step 403. The cloud controller determines the torque distribution ratio of the front and rear axles and the torque limit of the front and rear axles based on weather, road, location and other information. For example, when the vehicle is driving on icy and snowy roads, the cloud controller will recommend the four-wheel drive mode, and the torques of the front and rear axles are limited to a certain range to ensure the safe driving of the vehicle.

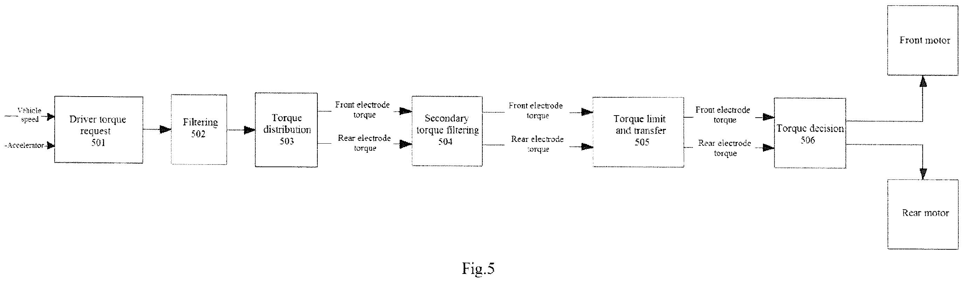

Fig. 5 is a schematic diagram of torque distribution processing of an electric vehicle drive control system according to an example of the present invention. Driver torque request detection and calculation (module 501), filtering (module 502), torque distribution (module 503), secondary torque filtering (module 504), torque limit and transfer (module 505), torque decision (module 506) and other functions can be realized by the cooperation of a detection device, the full vehicle controller in Fig. 1 and a motor drive controller or the like. The detection device may include pressure, speed, acceleration, temperature and other sensors. Various functional modules can be integrated in the full vehicle controller, and can also be distributed dispersively and are operated in conjunction with a central processing unit.

The driver torque request module 501 detects the current driving operation and determines a torque request value based on the current driving operation. The torque request value is filtered once to eliminate a request value that is mutated during the transition from the current total torque to the requested total torque to serve as an input parameter, and the full vehicle controller determines the torque distribution accordingly. According to the present invention, when the torque distribution is determined, in the current driving mode of the vehicle, the driving mode and the output torque of the motor in the driving mode are determined based on the vehicle speed of the vehicle and the drive control parameters related to the drive motor, and the fault condition of the motor is also considered, wherein the drive control parameters related to the drive motor include a wheel slip rate, a vehicle instability state, a drive motor temperature, and a temperature difference between the front and rear drive motors, and the like. It should be noted that, the vehicle speed can be obtained from the existing sensors and/or electronic systems of the vehicle, and some parameters such as the wheel slip rate and the vehicle instability state can be obtained from the chassis controller, but it is not excluded from other components of the vehicle, and these parameters such as the drive motor temperature, the temperature difference between the front and rear drive motors, and the fault condition of the driver motor can be obtained from the existing sensors and/or electronic systems of the vehicle and can also be obtained by adding corresponding sensors.

The secondary torque filtering module 504 in Fig. 5 can be configured to cause the full vehicle controller to perform secondary filtering on the torques of the front and rear axles after the torque distribution solution is determined. In different working conditions, the full vehicle controller will switch the torque distribution of the front and rear axles, if the total torque is unchanged or after the total torque is filtered once, secondary filtering can be performed on the torques of the front and rear axles, in this way, the smooth transition of the respective torque of the front axle and the rear axle can be ensured to improve the driving comfort.

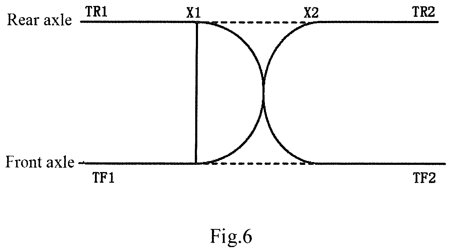

Fig. 6 illustrates the principle of performing secondary filtering on the torques of the front and rear axles during four-wheel drive. In the example shown in Fig. 6, the total torque of the front and rear axles determined by the full vehicle controller in the initial state is TR1+TF1, wherein TR1 is allocated to the rear axle and TF1 is allocated to the front axle. After the torque distribution solution is adjusted, the magnitude of the torque of the rear axle needs to be adjusted to TR2, and the torque of the front axle needs to be adjusted to TF2. If the secondary filtering is not performed, the torque of the rear axle changes from TR1 to TR2 at a time point X1 suddenly, and the torque of the front axle changes from TF1 to TF2 at the time point X1 suddenly, which will cause the shake of a full vehicle transmission system. However, according to the implementation solution of the present invention, the secondary filtering is performed on the torques of the front and rear axles respectively, so that the changes of the torques of the front and rear axles are no longer steep changes, but are completed within a time period of extending to X1 to X2, for example, the torques of the front and rear axles are controlled to smoothly increase or decrease according to the curve of the time points X1 to X2 as shown in Fig. 6, thereby ensuring the smooth transition of the torques of the front and rear axles.

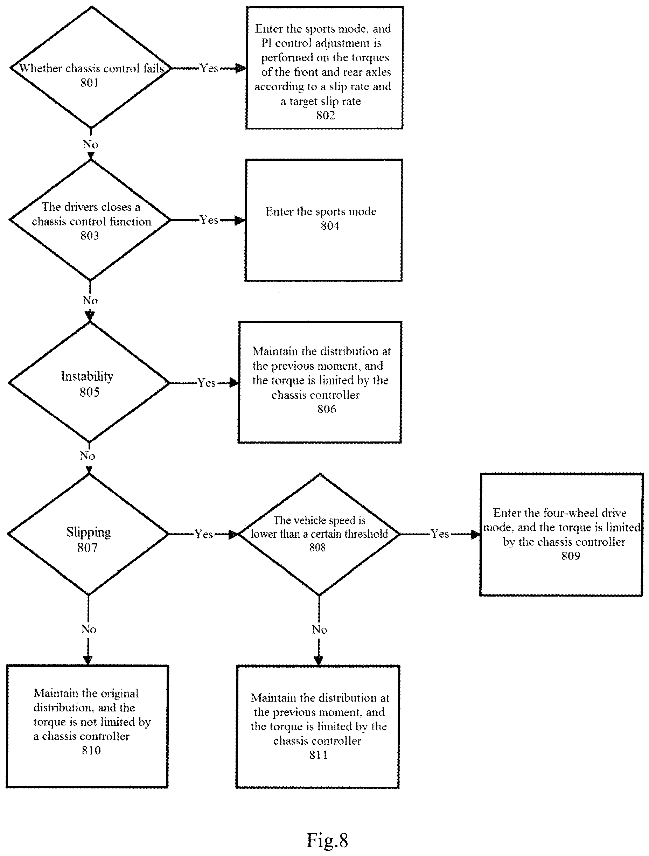

As shown in Fig. 5, the torque limit and transfer module 505 can be configured in such a way that, no matter in which mode, when the capacity of the front and rear drive motors is limited or one motor is faulty, the full vehicle controller transfers the torque beyond the capacity to the other motor. For example, when the driving condition of the vehicle is abnormal, such as vehicle slippage (such as single-axle slip) or instability, a TCS intervenes in the torque distribution adjustment and issues a torque instruction to the full vehicle controller to perform torque limit on the axle that generates slippage and instability (this will be explained below in conjunction with the example shown in Fig. 8). The limit amplitude can be determined by the characteristics of the drive motor, a power supply battery, the slip rate and the like. As an example, the limit amplitude can be obtained from a limit amplitude table preset into a controller of the vehicle such as a VCU, and the data in the table can be formulated based on empirical values. In some cases, the reduced torque can be transferred to the other axle and the other drive motor, thereby improving the ability of the vehicle to get out of trouble and reducing the torque loss at the same time.

Through the torque limit and transfer module 505, the torque is distributed by the full vehicle controller to the front drive and/or rear drive motor controllers to control the output of the drive motors. It should be noted that, according to the example of the present invention, the torque limit and transfer module 505 does not always have to limit and transfer the torque, for example, the limit and/or transfer of the torque distribution is that the limit and transfer module can perform the processing of limit and transfer only during the low-speed travelling of the vehicle, however, if the vehicle is in a high-speed travelling working condition, the torque transfer is not performed, but the torque instruction of the TCS is directly output to the front and rear drive motors through the full vehicle controller.

Fig. 5 shows that the torque limit and transfer is completed by one module. In actual operation, the two-step operation can also be performed separately. For example, if the torque transfer operation is moved forward between the torque distribution and the secondary filtering, and the transferred torque is not limited to the part that the TCS limits the torques of the axle and the drive motor corresponding to the slipping wheel or the wheel causing instability.

The torque decision module 506 in Fig. 5 can be configured to combine parameters from the chassis controller, such as the drive control parameters related to the drive motor, generate and execute corresponding control instructions and send the control instructions to the front and rear drive motor controllers.

For example, when the chassis controller detects that the vehicle is slipping (determined according to the slip rate) and the vehicle speed is lower than a certain preset value, such as 40kph, the full vehicle controller limits the torques of the front and rear axles according to the torque limit of the chassis controller, at the same time, the full vehicle controller enters a compulsive four-wheel drive mode to distribute the torques through front and rear axle loads. For example, when the vehicle is slipping, the total driver requested torque is 1000 Nm, the vehicle is in a single rear drive mode, and the chassis controller limits the rear drive torque to 400 Nm. At this time, the full vehicle controller distributes the torque according to the axle load, that is, 500Nm for the front axle and 500Nm for the rear axle, at the same time, the torque distribution of the front and rear axles is subject to the limitation of the torques of the front and rear axles by the chassis controller, and 500Nm is distributed to the front axle and 400Nm is distributed to the rear axle at last. Compared with the pure torque reduction function of the TCS system of the traditional vehicle, the solution greatly improves the ability of the electric vehicle to get out of trouble by entering the four-wheel drive mode under this working condition.

When the chassis controller detects that the vehicle is slipping and the vehicle speed is higher than a certain value, such as 40kph, the full vehicle controller does not transfer the torque, but directly limits the torques of the front and rear axles according to the requirements of the chassis controller. For example, when the vehicle is slipping, the total driver requested torque is 1000 Nm, the vehicle is in the single rear drive mode, and the chassis controller limits the rear drive torque to 400 Nm. At this time, the full vehicle controller is subject to the limitation of the torques of the front and rear axles by the chassis controller, that is, 0Nm is distributed to the front axle and 400Nm is distributed to the rear axle.

When the chassis controller detects that the vehicle is unstable, the full vehicle controller does not transfer the torque, but directly limits the torques of the front and rear axles according to the requirements of the chassis controller.

When the driver manually turns off the TCS function, the vehicle is switched to the sports mode, that is, the axle load distribution is installed for the torques of the front and rear axles, but the total torque of the front and rear axles remains the same as the total torque when the vehicle does not slip.

According to the example of the present invention, a control system and a corresponding control method of an electric vehicle drive system are provided. The control system and the control method are applicable to an electric vehicle including a front drive motor and a rear drive motor. The control system is configured to detect drive control parameters related to the drive motors, and when an abnormal parameter is detected in the drive control parameters, perform processing based on the type of the abnormal parameter.

According to one example of the present invention, the abnormal parameter includes a slip rate abnormal parameter indicating the slippage of the vehicle. The slip rate can be obtained based on the wheel speed, wheel radius and the linear speed of the vehicle, while the wheel speed, the wheel radius and the linear speed of the vehicle can be obtained from existing sensors in the vehicle. In some cases, the full vehicle controller can calculate the slip rate based on these existing sensors. In some cases, the control elements of some existing electronic systems in the vehicle can obtain the slip rate based on related parameters. In some cases, the chassis controller can calculate the slip rate based on related parameters. According to the example of the present invention, the full vehicle controller (for example, the chassis controller) can obtain the slip rate parameter, and judges whether the vehicle is slipping according to the slip rate parameter. In the case of determining that the slip rate parameter indicates that the vehicle is slipping, the presence of the abnormal slip rate parameter is determined, the current vehicle speed is compared with a first threshold, and if the vehicle speed is lower than the first threshold, the vehicle is controlled to enter the four-wheel drive mode.

Optionally, when entering the four-wheel drive mode, the chassis controller can limit/transfer the torque. If the vehicle speed is higher than the first threshold, the original torque distribution of the electric vehicle is maintained, and the chassis controller limits the torque. In a further example, if the vehicle speed is lower than the first threshold, the vehicle enters the four-wheel drive mode, and the chassis controller limits the torque output of the front drive motor or the rear drive motor, and transfers the limited output torque to the other drive motor.

According to yet another example of the present invention, the aforementioned abnormal parameter can include a chassis control failure parameter for indicating whether the chassis control fails. In the example, the step of receiving the drive control parameters related to the drive motors includes: receiving a parameter indicating the control state of a chassis, and judging whether the parameter indicates chassis control failure; in the case of judging chassis control, such as a chassis control caused by a fault, determining the presence of a chassis control failure parameter; and driving the front and rear drive motors of the electric vehicle to work simultaneously, and performing PI control adjustment on the torque of the front axle and the torque of the rear axle according to the current slip rate and the target slip rate of the electric vehicle, so as to limit/transfer the torque.

According to yet another example of the present invention, the aforementioned abnormal parameter can also include a chassis opening and closing abnormal parameter indicating whether the chassis control is turned off. The step of receiving the drive control parameters related to the drive motors includes: detect the opening and closing state of the chassis, and judging whether the chassis is closed; and when it is judged that the chassis is closed, determining the presence of the chassis opening and closing abnormal parameter, and driving the front and rear drive motors of the electric vehicle to work simultaneously.

According to another example of the present invention, the aforementioned drive control parameters can be parameters from the chassis, and the abnormal parameter can include an instability parameter indicating instability. The step of detecting/receiving the drive control parameters related to the drive motors includes: receiving the instability parameter indicating instability of the electric vehicle from the chassis; and the step of performing processing based on the type of the abnormal parameter can also include: maintaining the torque distribution of the electric vehicle, and and limiting the torque by the chassis controller.

According to another example of the present invention, the aforementioned drive control parameters can be a temperature parameter of the front drive motor and a temperature parameter of the rear drive motor, and the abnormal parameter includes a temperature abnormal parameter of the front drive motor and a temperature abnormal parameter of the rear drive motor indicating that the temperatures of the motors are higher than a temperature threshold. The temperature parameter of the front drive motor and the temperature parameter of the rear drive motor can be obtained by temperature sensors on the front drive motor and the rear drive motor. When any one of the temperature parameter of the front drive motor and the temperature parameter of the rear drive motor exceeds the temperature threshold, the full vehicle controller adjusts the drive mode based on whether the electric vehicle is currently in the four-wheel drive mode, the front drive mode or the rear drive mode.

The control system can further calculate the temperature difference between the front drive motor and the rear drive motor based on the temperature parameter of the front drive motor and the temperature parameter of the rear drive motor, and judge whether the temperature difference exceeds a temperature difference threshold; and when it is determined that the temperature difference exceeds the temperature difference threshold and the temperature of at least one of the drive motors exceeds the temperature threshold, the full vehicle controller adjusts the drive mode based on whether the electric vehicle is currently in the four-wheel drive mode, the front drive mode or the rear drive mode.

The above-described drive control parameters are examples of parameters from the chassis, can not only be implemented separately as separate examples, but also can be implemented in combination of two or more. Fig. 8 is a schematic flow diagram of a control method of an electric vehicle drive system according to an embodiment of the present invention, which is implemented by combining the above-described examples in which the drive control parameters are parameters from the chassis. The control method of the electric vehicle drive system illustrated in Fig. 8 shows, without limitation, the control process of the electric vehicle drive system of the present invention. In step 801, a parameter indicating the control state of the chassis is received, and whether the parameter indicates chassis control failure is judged. When the presence of a chassis control failure parameter is determined, step 810a is implemented to drive the electric vehicle to enter the sports mode, the current slip rates of the four wheels are calculated based on wheel speed sensors and acceleration sensors, PI control is performed on the current slip rate and the target slip rate (which can be calculated based on the vehicle speed and the acceleration) to perform torque intervention and transfer on the front and rear axles, so as to ensure that the slip rates of the front and rear axles are within the range of the target slip rate. Compared with the situation in which the safety level of the TCS of the traditional vehicle is reduced, the solution adds a torque protection mechanism when the TCS fails, which greatly improves the driving safety of the full vehicle. If the chassis control is not failed, step 803 is implemented to detect whether a chassis control function is turned off, and if yes, step 804 is implemented to drive the electric vehicle to enter the sports mode; if it is detected that the chassis control function is not turned off, step 805 is implemented to judge whether the vehicle is unstable, if it is judged that the vehicle is unstable, the torque distribution at the previous moment is maintained, and the torque is limited by the chassis controller, as shown in step 806; if it is judged that the vehicle is not unstable, step 807 is implemented to judge whether the vehicle is slipping, and whether the vehicle speed is lower than the first threshold (the threshold vehicle speed) is judged in step 808; when the detected wheel slip rate indicates that the vehicle is slipping, and the vehicle speed is lower than the first threshold, the vehicle drive system is controlled to switch to the four-wheel drive mode, and the chassis controller limits the torque output of the front or rear drive motor, as shown in step 809, and the limited output torque can be distributed to the other drive motor; when the detected wheel slip rate indicates that the vehicle is slipping, and the vehicle speed is higher than the first threshold, the vehicle drive system is controlled to maintain the current drive mode and the torque distribution, and the chassis controller limits the torque output of the front and rear drive motors, as shown in step 811; and if the detected wheel slip rate indicates that the vehicle is not slipping, the vehicle drive system is controlled to maintain the current drive mode and the torque distribution, and the torque output of the front and rear drive motors is not limited, as shown in step 810.

According to yet another example of the present invention, the drive control parameters related to the drive motors are the temperature parameter of the front drive motor and the temperature parameter of the rear drive motor, and the abnormal parameter includes a temperature abnormal parameter of the front drive motor and a temperature abnormal parameter of the rear drive motor indicating that the temperatures of the motors are higher than a temperature threshold. In the example, the temperature parameter of the front drive motor and the temperature parameter of the rear drive motor transmitted by a battery temperature sensing device are received, and whether the temperatures respectively indicated by the temperature parameter of the front drive motor and the temperature parameter of the rear drive motor exceed the temperature threshold is judged. Further, when any one of the temperature parameter of the front drive motor and the temperature parameter of the rear drive motor exceeds the temperature threshold, the drive mode is adjusted based on whether the electric vehicle is currently in the four-wheel drive mode, the front drive mode or the rear drive mode.

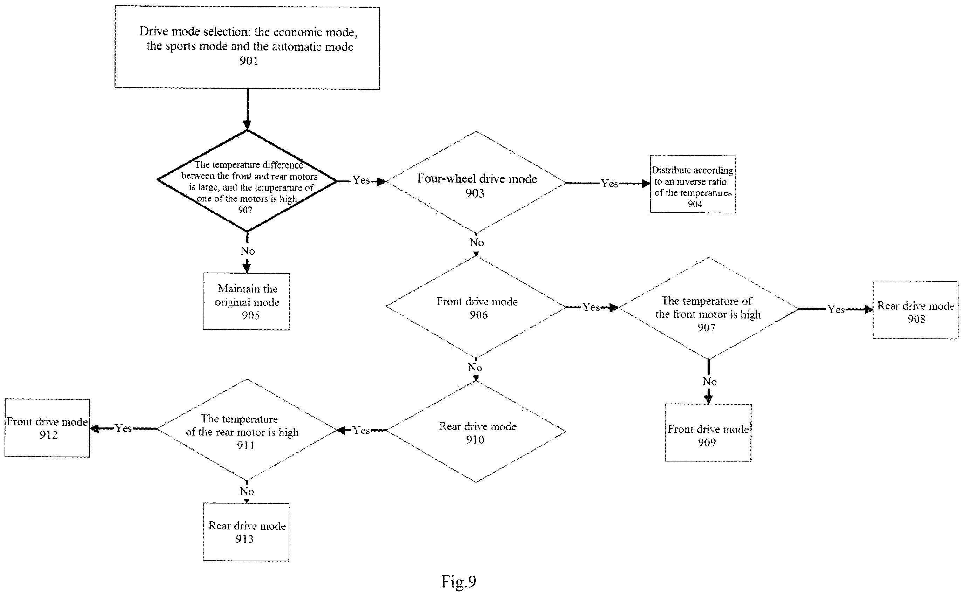

As a specific but non-limiting example in which the drive control parameters related to the drive motors are the temperature parameter of the front drive motor and the temperature parameter of the rear drive motor, Fig. 9 shows a control process of switching the drive mode based on the temperatures of different drive motors and the temperature difference between the front and rear drive motors. In step 902, the temperatures of the front and rear drive motors are detected, and the temperature difference is calculated; when the temperature difference between the front and rear drive motors is relatively large, such as exceeding a temperature difference threshold, and the temperature of one motor is relatively high, the temperature factor needs to be considered in the torque distribution of the front and rear axles to adjust toward a safer and more conservative direction, wherein the magnitude of the temperature difference threshold and the temperature threshold are determined based on the performance of the motor used by the vehicle. For example, in step 903, whether the vehicle is currently in the four-wheel drive mode is judged, and when the vehicle is currently in the four-wheel drive mode, then the torque distribution of the front and rear drive motors is distributed according to an inverse ratio of the temperatures of the motors, as shown in step 904; if the vehicle is not currently in the four-wheel drive mode, whether the vehicle is in the front drive mode is judged in step 906; if the vehicle is in the front drive mode, whether the temperature of the front drive motor is higher is judged in step 907; when the vehicle is in the front drive mode, if the temperature of the front drive motor is higher, the vehicle enters the rear drive mode, as shown in step 908; when the vehicle is in the front drive mode, and the temperature of the rear motor is higher, the vehicle continues to run in the front drive motor, as shown in step 909; if it is discovered in step 906 that the vehicle is not in the front drive mode, whether the vehicle is in the rear drive mode is judged in step 910; if the vehicle is in the rear drive mode, whether the rear drive motor is only higher is judged in step 911; when the vehicle is in the rear drive mode, and the temperature of the rear motor is higher, the vehicle enters the front drive mode, as shown in step 912; and when the vehicle is in the rear drive mode, and the temperature of the front motor is higher, the vehicle continues to run in the front drive motor, as shown in step 913. The critical choice of the temperatures depends on the characteristics of the motors, and the temperatures are different for different motors.

The present invention further includes a controller, the controller includes a memory and a processor, the memory stores a computer program, and the program can implement all steps in the method when executed by the processor, so as to achieve the dynamic control of the vehicle drive mode.

The present invention further includes a computer-readable storage medium for storing computer instructions, wherein the instructions can implement all steps in the method when executed by a computer or a processor, so as to achieve the dynamic control of the vehicle drive mode.

The above descriptions are only the preferred embodiments of the present invention, and do not limit the present invention in any form. Although the present invention has been disclosed in the preferred embodiments as above, the preferred embodiments are not used for limiting the present invention, anyone skilled familiar with this art can make some changes or modifications by using the technical contents disclosed above to serve as equivalent embodiments of equivalent changes, without departing from the scope of the technical solutions of the present invention, and any simple modifications, equivalent changes and modifications made to the above embodiments according to the technical essence of the present invention, without departing from the contents of the technical solutions of the present invention, still fall within the scope of the technical solutions of the present invention.

## Claims

1. A control method of an electric vehicle drive system, wherein the method is executed in an electric vehicle comprising a front drive motor and a rear drive motor, and the method comprises the following steps:
a. detecting drive control parameters related to the drive motors, and
b. when an abnormal parameter is detected in the drive control parameters, performing processing based on the type of the abnormal parameter.

2. The control method of the electric vehicle drive system according to claim 1, wherein the drive control parameter is a slip rate, the abnormal parameter comprises a slip rate abnormal parameter, and
the step a comprises:
detecting the slip rate; and
judging whether the slip rate indicates that the vehicle is slipping;
the step b comprises:
when it is judged that the vehicle is slipping according to the slip rate, determining the presence of the slip rate abnormal parameter; and
comparing the current vehicle speed with a first threshold, and if the vehicle speed is lower than the first threshold, entering a four-wheel drive mode.

3. The control method of the electric vehicle drive system according to claim 2, wherein the step b further comprises:
limiting the torque by a chassis controller when entering the four-wheel drive mode; and
if the vehicle speed is higher than the first threshold, maintaining the original torque distribution of the vehicle, and limiting the torque by the chassis controller.

4. The control method of the electric vehicle drive system according to claim 3, wherein the step b further comprises:
comparing the current vehicle speed with the first threshold, if the vehicle speed is lower than the first threshold, entering the four-wheel drive mode, limiting the torque output of the front drive motor or the rear drive motor by the chassis controller, and transferring the limited output torque to the other drive motor.

5. The control method of the electric vehicle drive system according to claim 1, wherein the abnormal parameter comprises a chassis control failure parameter indicating whether the chassis control fails, and
the step a comprises:
receiving a parameter indicating the control state of a chassis, and
judging whether the parameter indicates chassis control failure;
the step b comprises:
in the case of judging chassis control failure, determining the presence of the chassis control failure parameter; and
driving the front and rear drive motors of the electric vehicle to work simultaneously, and performing PI control adjustment on the torque of the front axle and the torque of the rear axle according to the current slip rate and the target slip rate of the electric vehicle.

6. The control method of the electric vehicle drive system according to claim 1, wherein the abnormal parameter comprises a chassis opening and closing abnormal parameter indicating whether the chassis control is turned off, the step a comprises: detecting the opening and closing state of the chassis, and judging whether the chassis is closed; and the step b comprises: when it is judged that the chassis is closed, determining the presence of the chassis opening and closing abnormal parameter, and driving the front and rear drive motors of the electric vehicle to work simultaneously.

7. The control method of the electric vehicle drive system according to claim 1, wherein the drive control parameter is an instability parameter indicating the instability of the electric vehicle, the abnormal parameter comprises an instability parameter indicating instability, and
the step a comprises:
receiving the instability parameter indicating the instability of the electric vehicle from the chassis; and
the step b comprises:
maintaining the torque distribution of the electric vehicle, and limiting the torque by the chassis controller.

8. The control method of the electric vehicle drive system according to claim 1, wherein the drive control parameters related to the drive motors are a temperature parameter of the front drive motor and a temperature parameter of the rear drive motor, the abnormal parameter comprises a temperature abnormal parameter of the front drive motor and a temperature abnormal parameter of the rear drive motor indicating that the temperatures of the motors are higher than a temperature threshold, and
the step a comprises:
receiving the temperature parameter of the front drive motor and the temperature parameter of the rear drive motor transmitted by a motor temperature sensing device; and
judging whether temperatures **characterized by** the temperature parameter of the front drive motor and the temperature parameter of the rear drive motor respectively exceed a preset temperature threshold; and
the step b comprises:
in the case that any one of the temperature parameter of the front drive motor and the temperature parameter of the rear drive motor exceeds the temperature threshold, adjusting the drive mode based on whether the electric vehicle is currently in the four-wheel drive mode, the front drive mode or the rear drive mode.

9. The control method of the electric vehicle drive system according to claim 8, wherein the judging whether the temperature parameter of the front drive motor and the temperature parameter of the rear drive motor exceed the temperature threshold comprises:
judging whether the temperature difference between the front drive motor and the rear drive motor exceeds a temperature difference threshold based on the temperature parameter of the front drive motor and the temperature parameter of the rear drive motor; and
the step b further comprises:
when it is determined that the temperature difference exceeds the temperature difference threshold and the temperature of at least one of the motors exceeds the temperature threshold, adjusting the drive mode based on whether the electric vehicle is currently in the four-wheel drive mode, the front drive mode or the rear drive mode.

10. The control method of the electric vehicle drive system according to any one of claims 1-9, further comprising:
presetting an economic mode, a sports mode and an automatic mode for the electric vehicle.

11. The control method of the electric vehicle drive system according to claim 10, wherein when the electric vehicle is running in the economic mode, the vehicle is driven to run in the rear drive mode, the front drive mode or the four-wheel drive mode based on the vehicle speed and a torque request, and the torque distribution is determined based on a preset torque distribution ratio in the four-wheel drive mode.

12. The control method of the electric vehicle drive system according to claim 10, wherein when the electric vehicle is running in the sports mode, the front drive motor and the rear drive motor work at the same time, and the torque is distributed according to the front and rear axle load ratio of the electric vehicle.

13. The control method of the electric vehicle drive system according to claim 10, wherein when the electric vehicle is running in the automatic mode, the driving intention is estimated according to the operation of a driver on an accelerator pedal, and the drive mode is switched to the sports mode or the economic mode accordingly.

14. The control method of the electric vehicle drive system according to claim 10, wherein the preset mode of the electric vehicle further comprises an intelligent interconnection mode, and the torque distribution of the electric vehicle is determined based on information from a remote end in this mode.

15. The control method of the electric vehicle drive system according to any one of claims 1-14, wherein in the torque distribution process of the electric vehicle, if torque switch between the front axle and the rear axle occurs, the torque is filtered before the torque switch is applied to the front axle and the rear axle.

16. A control system of an electric vehicle drive system for controlling the electric vehicle drive system comprising a front drive motor and a rear drive motor, wherein the control system comprises:
a detection device, configured to detect drive control parameters related to the drive motors; and
a processing device configured to, when an abnormal parameter is detected in the drive control parameters, perform processing based on the type of the abnormal parameter.

17. A controller, comprising a memory and a processor, wherein the memory is used for storing a computer program, and the processor implements the control method of the electric vehicle drive system according to any one of claims 1-15 when the program is running.

18. A computer-readable storage medium for storing computer instructions, wherein the instructions implements the control method of the electric vehicle drive system according to any one of claims 1-15 when executed.
